# EUROPEAN PATENT SPECIFICATION

(11) **EP 3 310 086 B1**
(45) Date of publication and mention of the grant of the patent: **25.08.2021**
(21) Application number: 16807255.1
(22) Date of filing: 17.05.2016
(51) Int. Cl.: H04W 16/14, H04M 3/00, H04W 16/18, H04W 88/18

(54) **SERVER DEVICE, COMMUNICATION DEVICE, METHOD AND COMPUTER PROGRAM**
SERVERVORRICHTUNG, KOMMUNIKATIONSVORRICHTUNG, VERFAHREN UND COMPUTERPROGRAMM
DISPOSITIF SERVEUR, DISPOSITIF DE COMMUNICATION, PROCÉDÉ ET PROGRAMME INFORMATIQUE ASSOCIÉS

(30) Priority: 09.06.2015 JP 2015116780
(43) Date of publication of application: 18.04.2018
(73) Proprietor: Sony Group Corporation, Tokyo 108-0075 (JP)
(72) Inventor: USUI, Takashi, Tokyo 108-0075 (JP); IDE, Naoki, Tokyo 108-0075 (JP); TSUDA, Shinichiro, Weybridge Surrey KT13 0XW (GB)
(74) Representative: Witte, Weller & Partner Patentanwälte mbB
(86) International application number: PCT/JP2016/064626
(87) International publication number: WO 2016/199548

(56) References cited:
- WO-A1-2014/027403
- WO-A1-2014/058366
- WO-A1-2015/025605
- JP-A- 2004 356 873
- JP-A- 2005 080 141
- JP-A- 2009 290 571
- JP-A- 2015 032 903
- US-A1- 2011 194 503

## Description

### Technical Field

The present disclosure relates to a server apparatus, a communication device, a method, and a computer program.

### Background Art

A wireless communication environment of recent years faces a problem of depletion of frequency resources, due to rapid increase of data traffic. Thus, discussion is in progress to utilize a frequency band in a secondary communication service, in accordance with a utilization situation of the primarily utilized frequency band (spectrum) whose utilization authorization is given to a specific business operator. For example, a standard for releasing an unused channel (a television white space) included in a frequency band of digital television broadcast of the United States of America for wireless communication is proposed in the IEEE 802.22 working group (refer to below Non-Patent Literature 1). Also, achievement of the practical use of a technology relevant to data transmission through the television white space is studied (refer to below Non-Patent Literature 2).

In addition, the technology relevant to the data transmission through the television white space is also proposed. For example, below Patent Literature 1 discloses a technology relevant to a procedure to acquire information of a frequency channel to be used, from among the white space, by spectrum sensing.

### Citation List

### Patent Literature

Patent Literature 1: JP 2012-509608T

### Non-Patent Literature

Non-Patent Literature 1: "IEEE 802.22 WG on WRANs", [online], [searched on May 1, 2015], Internet <URL: http://www.ieee802.org/22/>
Non-Patent Literature 2: "Implementing TV White Spaces", [searched on May 1, 2015], Internet <URL: http://stakeholders.ofcom.org.uk/consultations/white-space-coexistence/statement>

WO 2014/058366 A1 discloses methods and nodes for balancing load on channels available for secondary usage by a secondary network. A channel handling node determines channel quality metric values for the available channels, which indicate expected utility when the channels are used for radio communication. The channel handling node then adjusts the channel quality metric value of a superior channel with higher expected utility than the other available channels, to indicate equal or lower expected utility than a channel with the next highest expected utility, when the amount of channel queries from the secondary network exceeds a limit. The channel handling node then returns the adjusted channel quality metric value of the at least one superior channel, in response to a subsequent channel query. A secondary network node of the secondary network that receives channel quality metric values for the available channels, including the adjusted channel quality metric value of the superior channel, can then select a channel for secondary usage based on the received channel quality metric values, and is thus influenced to select a channel other than the at least one superior channel.

### Disclosure of Invention

### Technical Problem

When data transmission by the secondary communication service that utilizes the primarily utilized frequency band becomes widespread, the data transmission by the secondary communication service is more likely to have an influence on a user that uses a service that uses the primarily utilized frequency band. It is envisaged that some users do not mind the influence on the service that uses the primarily utilized frequency band, and other users mind the influence, depending on user. Thus, a scheme that allows collision of signals and leads to another service when interference occurs is considered effective.

Thus, the present disclosure proposes a new and improved server apparatus, a communication device, a method, and a computer program, which can allow collision of signals and efficiently lead to another service when interference occurs, in secondary utilization of a frequency band.

### Solution to Problem

According to the present disclosure, there is provided a server apparatus, a communication device, corresponding methods and a computer program as defined in the claims.

### Advantageous Effects of Invention

As described above, the present disclosure can provide a new and improved server apparatus, a communication device, a method, and a computer program, which can allow collision of signals and lead to another service when interference occurs, in secondary utilization of a frequency band.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating an example of a system at the time of using a frequency band of a DTV also in wireless communication.
[FIG. 2] FIG. 2 is an explanatory diagram illustrating an example of a frequency band used by a broadcast station and frequency bands used by a WSD that performs wireless communication by bundling a plurality of frequency bands.
[FIG. 3] FIG. 3 is an explanatory diagram illustrating an example of transmission of content in a frequency band f₂ by a WSD and wireless communication bundling frequency bands f₁ and f₃.
[FIG. 4] FIG. 4 is an example of a case in which a radio wave tower 10 performs digital television broadcast in a frequency band f₁.
[FIG. 5] FIG. 5 is an explanatory diagram illustrating a configuration example of a communication system according to an embodiment of the present disclosure.
[FIG. 6] FIG. 6 is an explanatory diagram illustrating a configuration example of a communication system according to an embodiment of the present disclosure.
[FIG. 7] FIG. 7 is an explanatory diagram illustrating a variant example of re-transmission of broadcast content by a WSD.
[FIG. 8] FIG. 8 is a block diagram illustrating a functional configuration example of a WSD 100 according to an embodiment of the present disclosure.
[FIG. 9] FIG. 9 is a block diagram illustrating a functional configuration example of a DTV receiver 200 according to an embodiment of the present disclosure.
[FIG. 10] FIG. 10 is a block diagram illustrating a functional configuration example of a management server 300 according to an embodiment of the present disclosure.
[FIG. 11] FIG. 11 is an explanatory diagram illustrating an example of information managed by a management server 300.
[FIG. 12] FIG. 12 is an explanatory diagram illustrating an example of information managed by a management server 300.
[FIG. 13] FIG. 13 is an explanatory diagram illustrating an example of information managed by a management server 300.
[FIG. 14] FIG. 14 is an example of visual information generated by a management server 300.
[FIG. 15] FIG. 15 is an explanatory diagram illustrating an example of information managed by a management server 300.
[FIG. 16] FIG. 16 is an explanatory diagram illustrating an example of a user interface generated by a management server 300.
[FIG. 17] FIG. 17 is an explanatory diagram illustrating an example of a user interface generated by a management server 300.
[FIG. 18] FIG. 18 is an explanatory diagram illustrating an example of a user interface generated by a management server 300.
[FIG. 19] FIG. 19 is a flow diagram illustrating an operation example of a communication system according to an embodiment of the present disclosure.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be made in the following order.
1. Embodiment of Present Disclosure
   1.1. Background
   1.2. Configuration Example
   1.3. Operation Example
2. Conclusion

### <1. Embodiment of Present Disclosure>

### [1.1. Background]

Before an embodiment of the present disclosure is described in detail, the background of the embodiment of the present disclosure will be described.

As described above, a wireless communication environment of recent years faces a problem of depletion of frequency resources, due to rapid increase of data traffic. Thus, discussion is in progress to utilize a frequency band in a secondary communication service, in accordance with a utilization situation of the primarily utilized frequency band (spectrum) whose utilization authorization is given to a specific business operator. For example, a standard for releasing an unused channel (a television white space) included in a frequency band of digital television broadcast of the United States of America for wireless communication is proposed in the IEEE 802.22 working group.

Below description will describe a case in which a service that utilizes a frequency band whose utilization authorization is given to a specific business operator is digital television broadcast (DTV). Note that the service that utilizes the frequency band whose utilization authorization is given to the specific business operator can include wireless microphone, radar (military, ship-based, weather, etc.), fixed-satellite service, telemetry, earth exploration satellite, etc., in addition to the digital television broadcast.

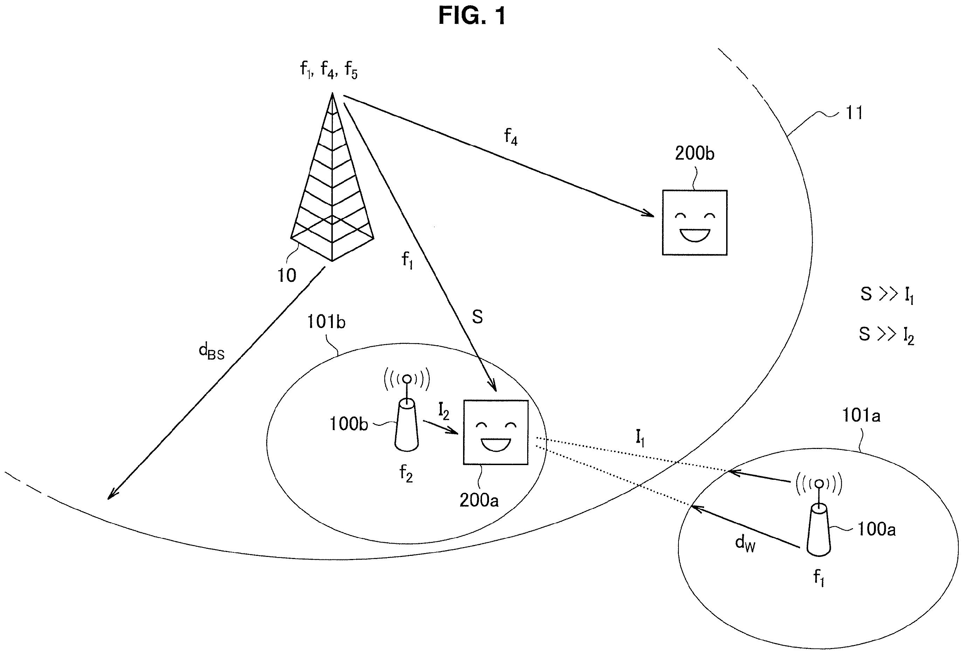

FIG. 1 is an explanatory diagram illustrating an example of a system at the time of using the frequency band of the DTV also in wireless communication. FIG. 1 is an example of a case in which a radio wave tower 10 performs digital television broadcast in frequency bands f₁, f₄, f₅.

FIG. 1 illustrates a situation in which a DTV receiver 200a that receives broadcast of the frequency band f₁ and a DTV receiver 200b that receives broadcast of the frequency band f₄ are positioned inside a service area 11 of the DTV Also, FIG. 1 illustrates a situation in which a white space device (WSD) 100a that performs wireless communication by using the frequency band f₁ is positioned outside the service area 11 of the DTV, and a WSD 100b that performs wireless communication by using the frequency band f₂ which is a frequency band not used in the DTV broadcast from the radio wave tower 10 is positioned inside the service area 11 of the DTV. The reference sign 101a illustrates a communicatable area of the WSD 100a, and the reference sign 101b illustrates a communicatable area of the WSD 100b.

The service area 11 (d_{BS}) of the DTV is a range whose distance from the radio wave tower 10 is within approximately several ten km for example, and the communicatable area 101a (d_{w}) of the WSD 100a is a range whose distance from the WSD 100a is within approximately 100 m for example. As a matter of course, the ranges of the service area 11 of DTV and the communicatable area 101a of the WSD 100a are not limited to such an example.

The WSD 100a which is a device that secondarily utilizes a television white space that is not utilized for television broadcast is positioned outside the service area 11 of the DTV, and if the transmission electric power has sufficiently small interference electric power I₁ to the DTV receiver 200a that is positioned inside the service area 11 of the DTV to receive the broadcast of the frequency band f₁, does not have an influence on the DTV receiver 200a that is positioned inside the service area 11 of the DTV to receive the broadcast of the frequency band f₁, even if the WSD 100a performs communication by using the frequency band f₁ of the DTV.

Also, even when positioned inside the service area 11 of the DTV, the WSD 100b that performs the wireless communication by using the frequency band f₂ not used in the digital television broadcast does not have an influence on the DTV receiver 200a that receives the broadcast of the frequency band f₁, if the WSD 100b performs wireless communication with transmission electric power of sufficiently small interference electric power I₂ to the DTV receiver 200a.

Also, in a difficult viewing area having a weak reception level of the DTV, such as near the boundary of the service area 11 of the DTV, back of commercial buildings, and back of mountains, the broadcast station installs a repeater transmitter station, in order to raise the reception level. However, the broadcast station considers cost-effectiveness of the management resources, and does not necessarily install the repeater transmitter station to rescue all difficult viewing areas. Thus, even if the DTV reception image quality is low to a certain degree, or even if the electric field is weak, the broadcast station does not locate the repeater transmitter station, when the image displayed by the DTV receiver is of a level that does not cause dissatisfaction of a viewer.

In the past, it is proposed to deploy a geo-location database (GLDB) that provides information such as a service area of DTV, a DTV receiver, and an allowable interference level, in order to control the transmission electric power of the WSD appropriately. Usually, utilization authorization of frequency band is given in each country (or area), and thus the GLDB can be deployed in each country (or area).

However, calculation of the GLDB is not perfect. This is because the propagation loss differs depending on terrain and the location of an obstacle. Thus, the GLDB is unable to perform strict calculation, and protection of reception of the DTV by the DTV receiver is not sufficient only by providing the GLDB. Hence, when the above weak electric field area has no margin, and a predetermined interference wave reaches the DTV receiver and exceeds an acceptable level (the ratio of allowable signal to interference wave), the image displayed by the DTV receiver is disturbed.

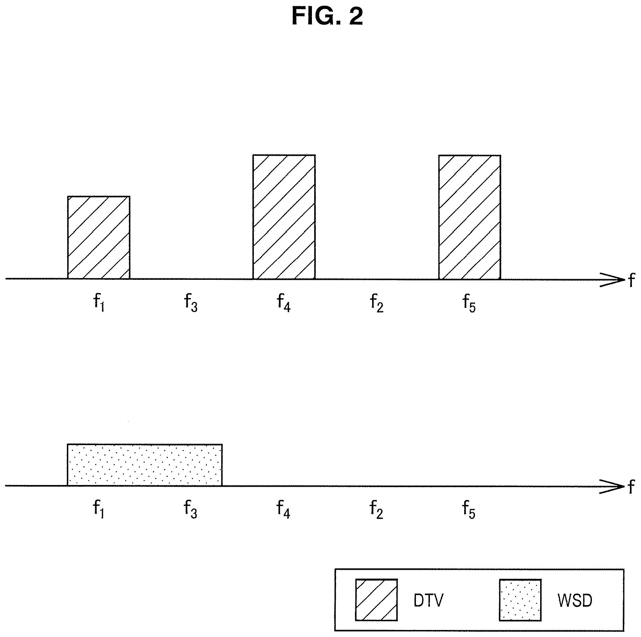

Also, there is a case in which, when the WSD is to perform wireless communication by bundling a plurality of frequency bands, a plurality of frequency bands are unable to be bundled, depending on the frequency band used by the radio wave tower 10. FIG. 2 is an explanatory diagram illustrating an example of the frequency band used by the radio wave tower 10 and the frequency band used by the WSD that performs the wireless communication by bundling a plurality of frequency bands. When the radio wave tower 10 performs the DTV broadcast in the frequency bands f₁, f₄, f₅ as illustrated in FIG. 2, the WSD is unable to bundle a plurality of frequency bands.

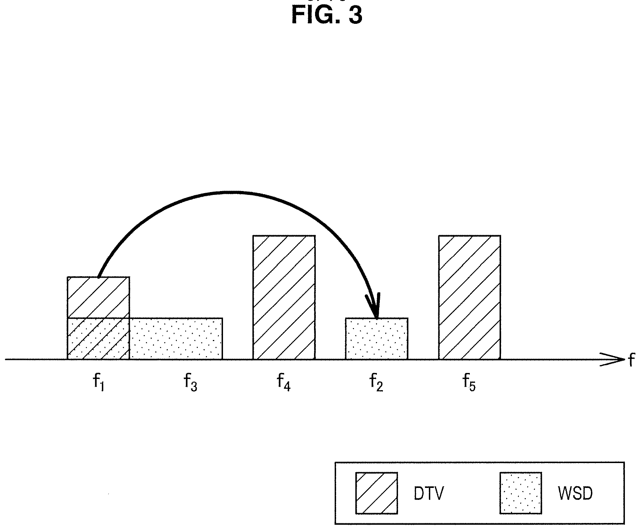

In this case, the WSD transmits the content broadcasted in the frequency band f₁ from the radio wave tower 10, by using the vacant frequency band f₂, and performs the wireless communication by bundling the frequency bands f₁ and f₃, for example. FIG. 3 is an explanatory diagram illustrating an example of the transmission of the content in the frequency band f₂ by the WSD and the wireless communication by bundling the frequency bands f₁ and f₃. If the WSD can utilize the frequency bands as illustrated in FIG. 3, effective utilization of the frequency bands is enabled.

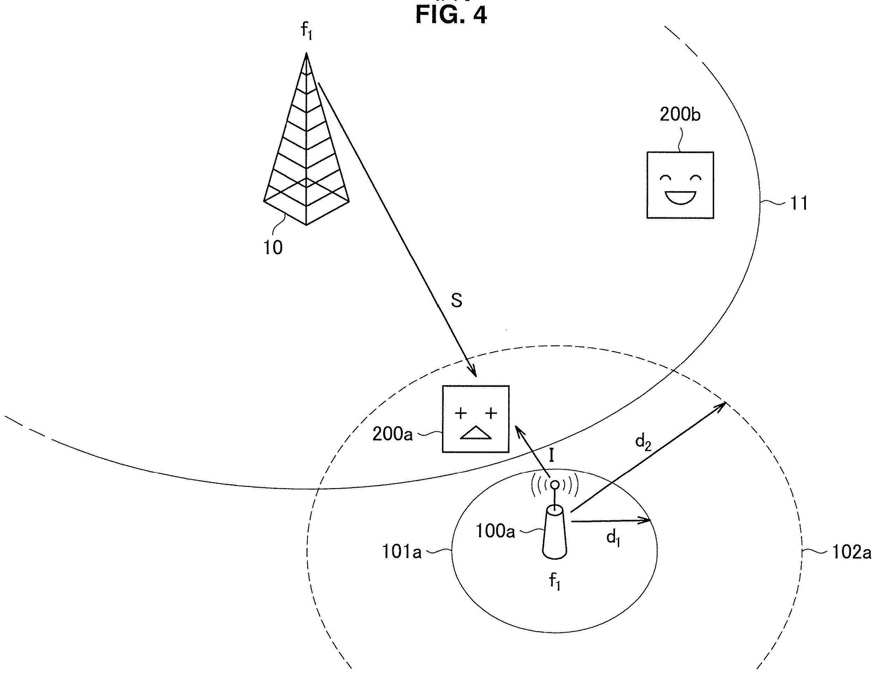

FIG. 4 is an example of a case in which the radio wave tower 10 performs the digital television broadcast in the frequency band f₁. FIG. 4 illustrates a situation in which the DTV receiver 200a that receives the broadcast of the frequency band f₁ and the DTV receiver 200b that receives the broadcast of the frequency band f₄ are positioned inside the service area 11 of the DTV. Also, FIG. 4 illustrates a situation in which the WSD 100a that performs the wireless communication by using the frequency band f₁ is positioned outside the service area 11 of the DTV. The reference sign 101a illustrates a communicatable area of the WSD 100a, and the reference sign 102a illustrates an area that has the possibility of interfering by the wireless communication of the WSD 100a.

When the WSD 100a performs the wireless communication at a comparatively close position from a weak electric field area, such as near the boundary of the service area 11 of DTV (for example, a site several km away from the boundary of the service area 11) as in FIG. 4, there is a problem that S/I (the ratio of allowable signal to interference wave) of the DTV receiver 200a exceeds an acceptable level with a certain probability, due to the interference wave. That is, deciding the transmission electric power of the WSD to rescue all DTV receivers strictly is not realistic. This is because, if such transmission electric power is to be decided, a margin of approximately several ten dB is necessary, and the channels (frequency bands) are limited, and thus operation is unable to be performed realistically.

Hence, it is generally acknowledged that the situation like FIG. 4 occurring with a certain degree of probability be allowed. By allowing the situation like FIG. 4, a usable television white space channel can be ensured without a large margin, even with a small number of vacancy channels (frequency bands), and the market scale of communication that uses the television white space can be ensured.

Also, the disturbance of the image received by the DTV receiver occurs with a certain probability, but it is rare that the disturbance of the image occurs steadily, and it is envisaged that a viewer often allows the disturbance of the image if it is instantaneous. Thus, it is desirable to decide the transmission electric power of the WSD by setting a realistic probability for both of the interference by the WSD and the disturbance of the image in the DTV receiver.

However, it is envisaged that there is a viewer who wants to view a program with no disturbance of images, as a matter of course. An alternative broadcast station, such as a repeater transmitter station, is necessary for such a viewer. In particular, there is a case in which the signal intensity of the DTV is weaker than expected, at the back of mountains and the back of commercial buildings in a specific area, and there is a location at which, if the transmission electric power is calculated by the same calculation method uniformly in all area, the images received by the DTV receiver are often disturbed, or the transmittable electric power of the WSD becomes significantly small and is unable to be operated realistically.

Thus, in consideration of the above background, the discloser of the present application has performed intense study of the technology that provides an appropriate service to both of a user who does not mind temporary influence due to interference and a user who minds the temporary influence, when the service that uses a primarily utilized frequency band uses the frequency band in secondary communication. As a result, the discloser of the present application has reached devising a technology that obtains information from both of a provision side and a utilization side of the service that uses the primarily utilized frequency band and provides an appropriate service to the above users of the both sides.

In the above, the background of the embodiment of the present disclosure has been described.

### [1.2. Configuration Example]

First, illustrated is a system configuration example for solving interference at the time of reception of the broadcast of the frequency band f₁ by the DTV receiver 200a when the WSD 100a and the DTV receiver 200a are located as in FIG. 4.

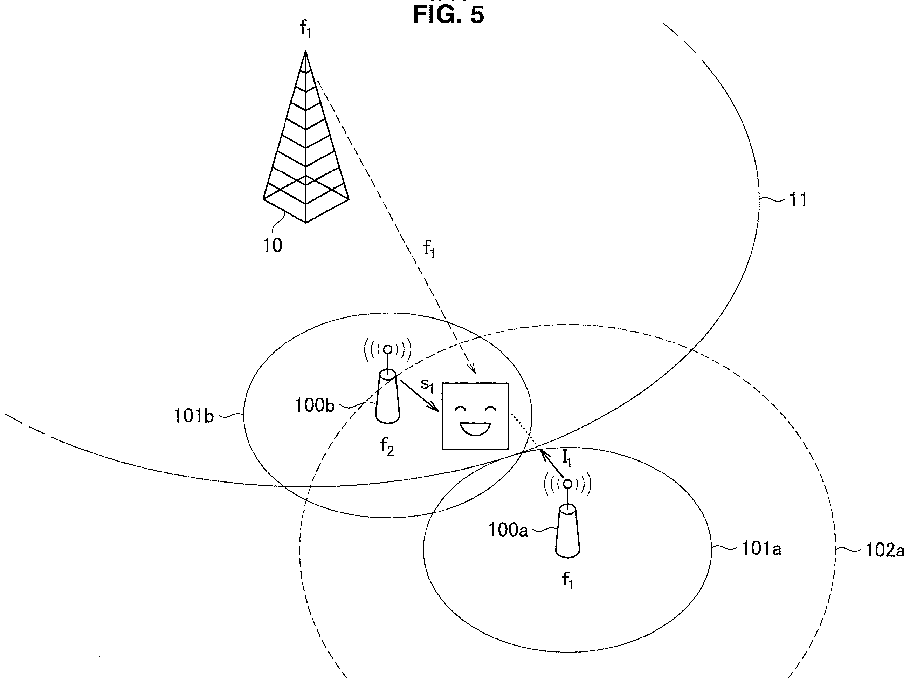

FIG. 5 is an explanatory diagram illustrating a configuration example of a communication system according to an embodiment of the present disclosure. A case is considered in which the WSD 100a positioned outside the service area 11 of the DTV performs wireless communication by using the frequency band f₁, and thereby an interference wave is generated, and there is an influence on the reception of the DTV broadcast that uses the frequency band f₁ in the DTV receiver 200a. When a viewer of the DTV receiver 200a minds the influence on the reception of the DTV broadcast, it is necessary that the DTV receiver 200a receive the content of the DTV broadcast by some method.

Thus, in this case, the WSD 100b re-transmits the content of the DTV broadcast that uses the frequency band f₁, by using the vacant frequency band f₂. By receiving the content transmitted by using the frequency band f₂ from the WSD 100b, the DTV receiver 200a can display the content with no disturbance of the images, even when the WSD 100a performs the wireless communication by using the frequency band f₁.

Note that the WSD 100b may perform a television white space service, that is, the wireless communication in the frequency band f₃, in the frequency band f₃ that differs from the frequency bands f₁, f₂. Also, if the content of the DTV broadcast that uses the frequency band f₁ is re-transmitted by using the frequency band f₂, the WSD 100b may perform the television white space service, that is, the wireless communication in the frequency band f₁, in the frequency band f₁.

Here, when the WSD 100b performs the television white space service, that is, the wireless communication in the frequency band f₁, in the frequency band f₁, the DTV receiver 200a needs to know in advance which frequency band the content of the DTV broadcast is to be received in.

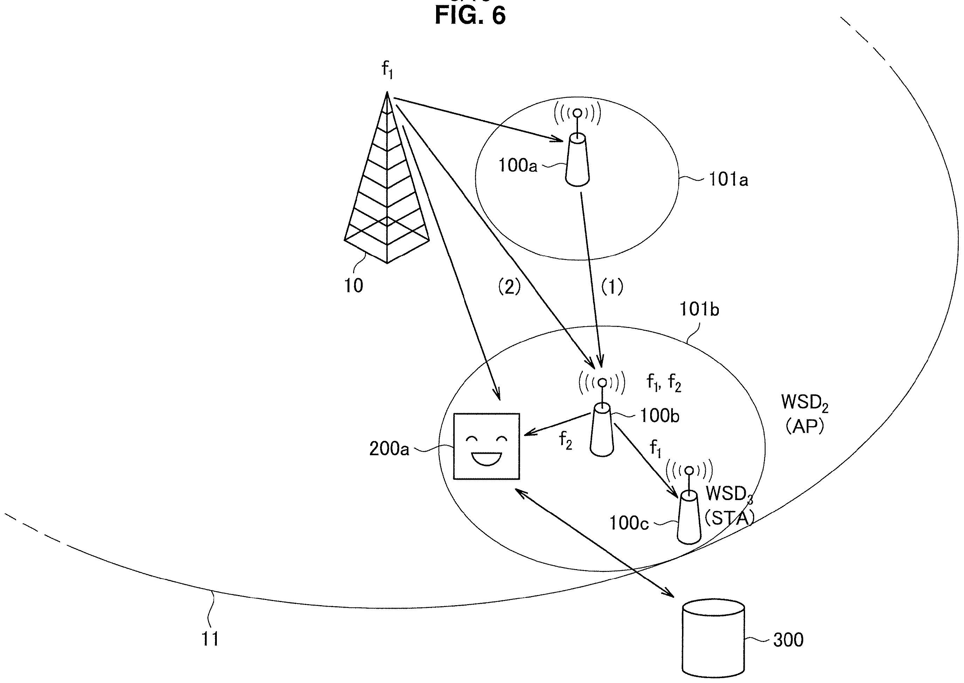

FIG. 6 is an explanatory diagram illustrating a configuration example of a communication system according to the embodiment of the present disclosure. A case is considered in which the WSD 100b positioned inside the service area 11 of the DTV performs the wireless communication by using the frequency band f₁, and thereby an interference wave is generated, and there is an influence on the reception of the DTV broadcast that uses the frequency band f₁ in the DTV receiver 200a. FIG. 6 illustrates a WSD 100c that receives radio waves transmitted by using the frequency band f₁ from the WSD 100b and performs the wireless communication with the WSD 100b.

Also, a management server 300 is illustrated in FIG. 6. The management server 300 manages information relevant to the content broadcasted from the radio wave tower 10 and the information of the WSD and the DTV receiver. Although the information managed by the management server 300 will be described later in detail, the management server 300 manages information relevant to installation sites of the WSD and the DTV receiver, a viewing situation by the DTV receiver, information relevant to the communications capacity of the WSD, etc.

The WSD 100b may receive the content of the DTV broadcast that uses the frequency band f₁ which is broadcasted from the radio wave tower 10, directly from the radio wave tower 10, and may receive from another WSD 100a positioned inside the service area 11 of the DTV. Then, the WSD 100b re-transmits the content of the DTV broadcast broadcasted from the radio wave tower 10 by using the frequency band f₁, in the frequency band f₂.

Here, the DTV receiver 200a acquires in advance which frequency band to receive the content of the DTV broadcast at, from the management server 300. For example, by acquiring from the management server 300 a fact that the WSD 100b re-transmits the content of the DTV broadcast broadcasted from the radio wave tower 10 by using the frequency band f₁, in the frequency band f₂, the DTV receiver 200a can display the content of the DTV broadcast without the influence of the interference, if the DTV receiver 200a receives the content of the DTV broadcast broadcasted from the radio wave tower 10 in the frequency band f₂.

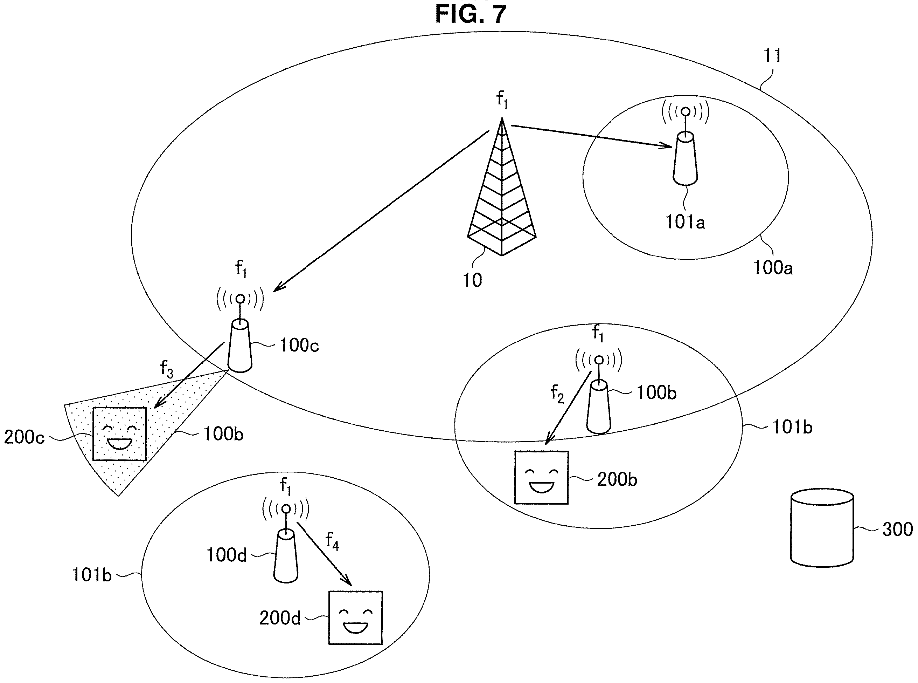

FIG. 7 is an explanatory diagram illustrating a variant example of re-transmission of broadcast content by the WSD. FIG. 7 illustrates a WSD 100a positioned inside the service area 11 of the DTV, a WSD 100b positioned near the boundary of the service area 11 of DTV, a WSD 100c, and a WSD 100d positioned outside the service area 11 of DTV. Also, FIG. 7 illustrates DTV receivers 200b, 200c, 200d positioned outside the service area 11 of the DTV.

FIG. 7 illustrates an example in which the WSD 100b, the WSD 100c, the WSD 100d re-transmit the broadcast content in the frequency band f₂, the frequency band f₃, the frequency band f₄, respectively. Note that, in FIG. 7, the reference signs 101a, 101b, 101c, 101d indicate the communicatable areas of the WSD 100a, the WSD 100b, the WSD 100c, the WSD 100d, respectively. The communicatable area of the WSD may have omnidirectional characteristics, and may have directional characteristics as indicated by the reference sign 101c.

In the above, the configuration example of the communication system according to the embodiment of the present disclosure has been described. Next, a functional configuration example of each device for composing the communication system according to the embodiment of the present disclosure will be described.

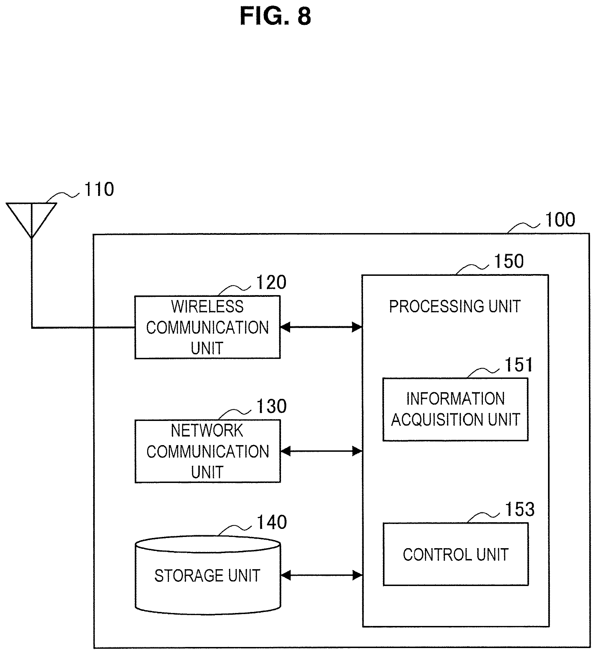

FIG. 8 is a block diagram illustrating a functional configuration example of the WSD 100 according to an embodiment of the present disclosure. As illustrated in FIG. 8, the WSD 100 according to an embodiment of the present disclosure includes an antenna unit 110, a wireless communication unit 120, a network communication unit 130, a storage unit 140, and a processing unit 150.

### (Antenna Unit 110)

The antenna unit 110 radiates a signal output by the wireless communication unit 120 in the space as a radio wave. Also, the antenna unit 110 converts the radio wave of the space to a signal, and outputs the signal to the wireless communication unit 120. In the present embodiment, the antenna unit 110 may be a directional antenna, and may be an omnidirectional antenna.

### (Wireless Communication Unit 120)

The wireless communication unit 120 transmits and receives signals. For example, the wireless communication unit 120 transmits a downlink signal to a terminal device, and receives an uplink signal from the terminal device.

### (Network Communication Unit 130)

The network communication unit 130 transmits and receives information. For example, the network communication unit 130 transmits the information to another node, and receives the information from another node. For example, above another node includes another WSD and base station. As an example, above another node includes the management server 300.

### (Storage Unit 140)

The storage unit 140 temporarily or permanently stores a program and data for the operation of the WSD 100.

### (Processing Unit 150)

The processing unit 150 provides various functions of the WSD 100. The processing unit 150 includes an information acquisition unit 151 and a control unit 153. Note that the processing unit 150 can further include another component other than these components. That is, the processing unit 150 can perform operation other than the operation of these components.

### (Information Acquisition Unit 151)

The information acquisition unit 151 acquires the information and the program for the operation of the WSD 100, and the information received from another node. The information acquisition unit 151 can acquire the information and the program for the operation of the WSD 100 from the storage unit 140. In the present embodiment, the information acquisition unit 151 acquires the content of the DTV broadcast broadcasted from the radio wave tower 10. The content of the DTV broadcast acquired by the information acquisition unit 151 can be re-transmitted from the network communication unit 130 at a frequency band that is different from the frequency band at the time of the broadcast from the radio wave tower 10. Also, the information acquisition unit 151 acquires the information generated by the server apparatus 300. Although an example of the information that is generated by the server apparatus 300 and is acquired by the information acquisition unit 151 will be described later, the information acquisition unit 151 acquires, from the server apparatus 300, the information of a usable frequency band and the output intensity authorized at the frequency band, for example.

### (Control Unit 153)

The control unit 153 controls the operation of the WSD 100. In the present embodiment, the control unit 153 executes a process for re-transmitting the content of the DTV broadcast acquired by the information acquisition unit 151, from the network communication unit 130 at a frequency band that is different from the frequency band at the time of the broadcast from the radio wave tower 10, for example. Note that the WSD 100 may perform re-transmission in the same format as the format of the DTV broadcast regardless of the frequency band, and may perform re-transmission in the same format as the DTV broadcast format when re-transmitting in the same frequency band as the DTV broadcast, and in a different format of the wireless method when re-transmitting in the frequency band that differs from the DTV broadcast, respectively, and may perform re-transmission in the format of the wireless method that differs from the format of the DTV broadcast regardless of the frequency band.

Also, the control unit 153 executes a process for sending the information of the WSD 100 to the management server 300. Although the information of the WSD 100 sent to the management server 300 will be described later in detail, the information of the WSD 100 sent to the management server 300 can include the position of the WSD 100, the frequency band used in the wireless communication by the WSD 100, etc., for example.

Also, the control unit 153 acquires the information managed by the management server 300, and decides whether or not to re-transmit the content of the DTV broadcast acquired by the information acquisition unit 151, from the network communication unit 130 at a frequency band that is different from the frequency band at the time of the broadcast from the radio wave tower 10, on the basis of the acquired information. Also, the control unit 153 acquires the information managed by the management server 300, and decides the frequency band used in the wireless communication and the communication intensity in the frequency band, on the basis of the acquired information. Then, the control unit 153 executes a process for sending, to the management server 300, the information of the frequency band and the communication intensity decided on the basis of the information acquired from the management server 300.

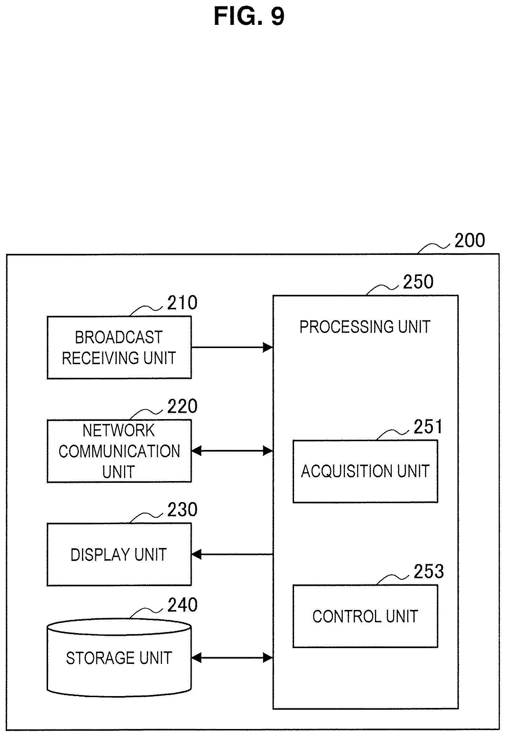

FIG. 9 is a block diagram illustrating a functional configuration example of the DTV receiver 200 according to an embodiment of the present disclosure. As illustrated in FIG. 9, the DTV receiver 200 according to an embodiment of the present disclosure includes a broadcast receiving unit 210, a network communication unit 220, a display unit 230, a storage unit 240, and a processing unit 250.

### (Broadcast Receiving Unit 210)

The broadcast receiving unit 210 receives the content of the DTV broadcast transmitted from the radio wave tower 10. Also, the broadcast receiving unit 210 receives the content of the DTV broadcast re-transmitted from the WSD 100. The content of the DTV broadcast received by the broadcast receiving unit 210 is decoded in the processing unit 250, and is displayed on the display unit 230.

### (Network Communication Unit 220)

The network communication unit 220 transmits and receives information. For example, the network communication unit 220 transmits the information to another node, and receives the information from another node. For example, above another node includes another WSD and base station. As an example, above another node includes the management server 300. Note that the network communication unit 220 may perform wired communication, and may perform wireless communication via an antenna that is not depicted.

### (Display Unit 230)

The display unit 230 is a liquid crystal display, an organic EL display, or the like, for example, and displays the content of the DTV broadcast received by the broadcast receiving unit 210.

### (Storage Unit 240)

The storage unit 240 temporarily or permanently stores a program and data for the operation of the DTV receiver 200.

### (Processing Unit 250)

The processing unit 250 provides various functions of the DTV receiver 200. The processing unit 250 includes an information acquisition unit 251 and a control unit 253. Note that the processing unit 250 can further include another component other than these components. That is, the processing unit 250 can perform operation other than the operation of these components.

### (Information Acquisition Unit 251)

The information acquisition unit 251 acquires the information and the program for the operation of the DTV receiver 200, and the information received from another node. The information acquisition unit 251 can acquire the information and the program for the operation of the DTV receiver 200, from the storage unit 240. In the present embodiment, the information acquisition unit 251 acquires the content of the DTV broadcast transmitted from the radio wave tower 10 and the WSD 100. The content of the DTV broadcast acquired by the information acquisition unit 251 can be decoded in the control unit 253, and be displayed by the display unit 230.

### (Control Unit 253)

The control unit 253 controls the operation of the DTV receiver 200. In the present embodiment, the control unit 253 executes a process for decoding the content of the DTV broadcast acquired by the information acquisition unit 251, and displaying the content on the display unit 230, for example. Also, the control unit 253 executes a process for sending the information of the DTV receiver 200 to the management server 300. Although the information of the DTV receiver 200 sent to the management server 300 will be described later in detail, the information of the DTV receiver 200 sent to the management server 300 can include the position of the DTV receiver 200, the number of viewers of the DTV receiver 200, the frequency band of the DTV broadcast received by the DTV receiver 200, etc., for example.

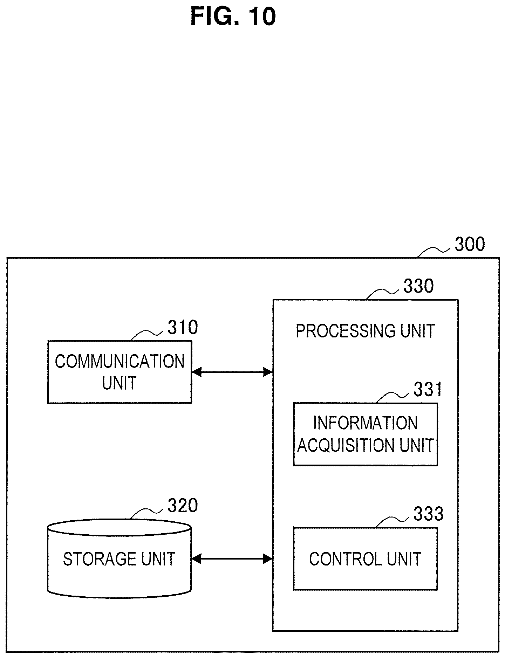

FIG. 10 is a block diagram illustrating a functional configuration example of the management server 300 according to an embodiment of the present disclosure. As illustrated in FIG. 10, the management server 300 according to an embodiment of the present disclosure includes a communication unit 310, a storage unit 320, and a processing unit 330.

### (Communication Unit 310)

The communication unit 310 transmits and receives information. For example, the communication unit 310 transmits the information to another node, and receives the information from another node. For example, above another node includes a core network and a base station. As an example, above another node includes the WSD 100 and the DTV receiver 200. The communication unit 310 receives the information transmitted from the WSD 100 and the DTV receiver 200, and transmits the information to the WSD 100 and the DTV receiver 200.

### (Storage Unit 320)

The storage unit 320 temporarily or permanently stores a program and data for the operation of the management server 300. In the present embodiment, the storage unit 320 stores the information acquired from the WSD 100 and the DTV receiver 200.

### (Processing Unit 330)

The processing unit 330 provides various functions of the management server 300. The processing unit 330 includes an information acquisition unit 331 and a control unit 333. Note that the processing unit 330 can further include another component other than these components. That is, the processing unit 330 can perform operation other than the operation of these components.

### (Information Acquisition Unit 331)

The information acquisition unit 331 acquires the information for the operation of the management server 300 and the information received from another node. The information acquisition unit 331 can acquire, from the storage unit 320, the information and the program for the operation of the management server 300. Also, the information acquisition unit 331 acquires the information that is transmitted from the WSD 100 and the DTV receiver 200 and is received by the communication unit 310.

### (Control Unit 333)

The control unit 333 controls the operation of the management server 300. The control unit 333 can operate on the basis of the information acquired by the information acquisition unit 331. Also, the control unit 333 generates information for managing the WSD 100 and the DTV receiver 200, on the basis of the information that is transmitted from the WSD 100 and the DTV receiver 200 and is acquired by the information acquisition unit 331.

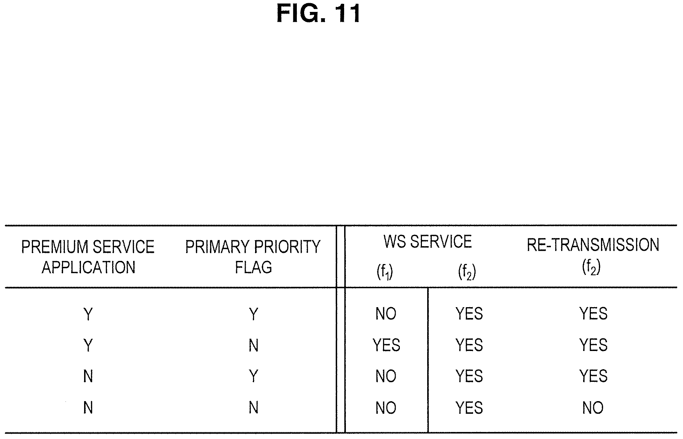

Here, an example of the information managed by the management server 300 will be described. FIG. 11 is an explanatory diagram illustrating an example of the information managed by the management server 300. FIG. 11 illustrates an example of information of service levels of a user to which the television white space service is provided by using the WSD 100.

In the present embodiment, the television white space service by the WSD 100, that is, the service to be applied for by the user who wants to utilize the wireless communication that uses the television white space is referred to as "premium service". Also, a flag for setting whether or not a provider side of the primary service prioritizes the primary service is referred to as "primary priority flag". In the present embodiment, the provider of the primary service is the radio wave tower 10, and the primary service is the DTV broadcast broadcasted in the frequency band f₁ by the radio wave tower 10. The broadcast station can set the primary priority flag for each content.

FIG. 11 indicates that the television white space service in the frequency band f₁ is not performed, if the user has not applied for the premium service. On the other hand, FIG. 11 indicates that the television white space service in the frequency band f₁ is performed if the user has applied for the premium service, but the television white space service in the frequency band f₁ is not performed if the DTV receiver 200 is prioritized to receive the content of the DTV broadcast broadcasted in the frequency band f₁ by the radio wave tower 10. Note that, when the premium service is set to be prioritized, the television white space service in the frequency band f₁ is performed even if the primary priority flag is Y.

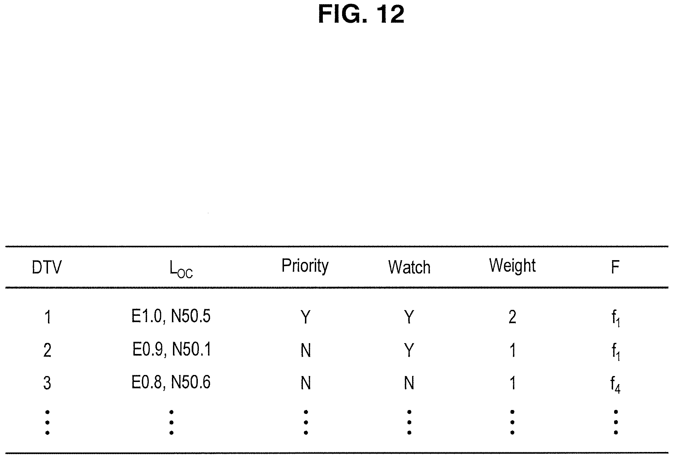

FIG. 12 is an explanatory diagram illustrating an example of the information managed by the management server 300. FIG. 12 illustrates an example of a table for storing the information relevant to the DTV receiver 200.

The "DTV" column is a column for storing the information for identifying the DTV receiver 200 uniquely. In the "DTV" column, ID, serial number, or the like is stored for example.

The "Loc" column is a column for storing the information relevant to the position of the DTV receiver 200. In the "Loc" column, detailed information of latitude and longitude may be stored, and an address input by the user of the DTV receiver 200 may be stored, for example. Thus, the DTV receiver 200 may be provided with a sensor that acquires a current position, such as a global positioning system (GPS), a global navigation satellite system (GLONASS), a BeiDou navigation satellite system (BDS), and an iBeacon, for example. Also, even if the DTV receiver 200 is not provided with the sensor described above, the user may register the position information acquired by using such a sensor, in the management server 300, as the position information of the DTV receiver 200.

The "Priority" column is a column that corresponds to the primary priority flag of FIG. 11 and stores the information of whether or not the DTV receiver 200 is prioritized to receive the content of the DTV broadcast broadcasted from the radio wave tower 10. It is meant that the DTV receiver 200 whose "Priority" column is "Y" is prioritized to receive the content of the DTV broadcast broadcasted from the radio wave tower 10, and the DTV receiver 200 whose "Priority" column is "N" does not mind the influence on the reception of the content of the DTV broadcast broadcasted from the radio wave tower 10.

The "Watch" column is a column for storing the information of whether or not the DTV receiver 200 outputs video. Note that, in the "Watch" column, "Y" may be stored if the DTV receiver 200 outputs the video, and "Y" may be stored if the DTV receiver 200 outputs the video and someone is viewing the video. Thus, the DTV receiver 200 may be provided with a sensor for detecting existence of a viewer.

The "Weight" column is a column for storing the information of the weight to each DTV receivers 200. The weight may be decided by the user of the DTV receiver 200, and may be decided in accordance with the number of users who view the video output by the DTV receiver 200, and may be decided in accordance with the performance of the DTV receiver 200, for example the screen size.

The "F" column is a column for storing the information of the frequency band of the DTV broadcast received by each DTV receiver 200.

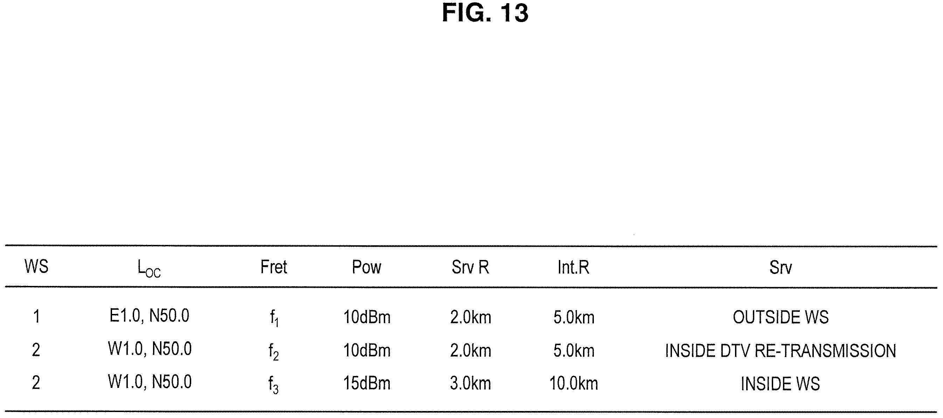

FIG. 13 is an explanatory diagram illustrating an example of the information managed by the management server 300. FIG. 13 illustrates an example of a table for storing the information relevant to the WSD 100.

The "WS" column is a column for storing the information for identifying the WSD 100. In the "WS" column, ID, serial number, or the like is stored for example.

The "Loc" column is a column for storing the information relevant to the position of the WSD 100. In the "Loc" column, the detailed information of the latitude and the longitude may be stored, and the address input by the operator of the WSD 100 may be stored, for example. Thus, the WSD 100 may be provided with a sensor for acquiring a current position, such as GPS, GLONASS, BDS, and iBeacon, for example. Also, even if the WSD 100 is not provided with the sensor described above, the operator of the WSD 100 may register the position information acquired by using such a sensor in the management server 300, as the position information of the WSD 100.

The "Freq" column is a column for storing the information of the frequency band in which the WSD 100 performs the television white space service. One WSD 100 can perform the television white space service in a plurality of frequency bands. Thus, the table illustrated in FIG. 13 is set unique to the "WS" column and the "Freq" column.

The "Pow" column is a column for storing the information of output when the WSD 100 performs the television white space service.

The "SrvR" column is a column for storing the information of the service range (communicatable area) when the WSD 100 performs the television white space service. The "Int.R" column is a column for storing the information of the interference range that can interfere when the WSD 100 performs the television white space service. The management server 300 may calculate the information of the interference range from the service range. The management server 300 may consider the situation of terrain, when calculating the information of the interference range from the service range. The "Srv" column is a column for storing the information of the state of the service of the current WSD 100. The "Srv" column stores information of whether inside or outside of the service area 11 of the DTV broadcast transmitted from the radio wave tower 10, and information of whether the television white space service is performed or whether the re-transmission of the content of the DTV broadcast is performed.

The management server 300 can supply various information to the operator of the WSD 100 and the user of the DTV receiver 200, by managing the information illustrated in FIG. 12 and FIG. 13. For example, the management server 300 can generate information that visually expresses the positions of the WSD 100 and the DTV receiver 200, the interference range and communicatable area by the WSD 100, by using the information illustrated in FIG. 12 and FIG. 13. That is, in other words, the management server 300 can manage statistical information of the DTV receiver 200 in an interference giving region of the WSD 100, and generate visual information based on the statistical information. Also, by managing the information as illustrated in FIG. 12 and FIG. 13, the management server 300 to the administrator of the DTV broadcast

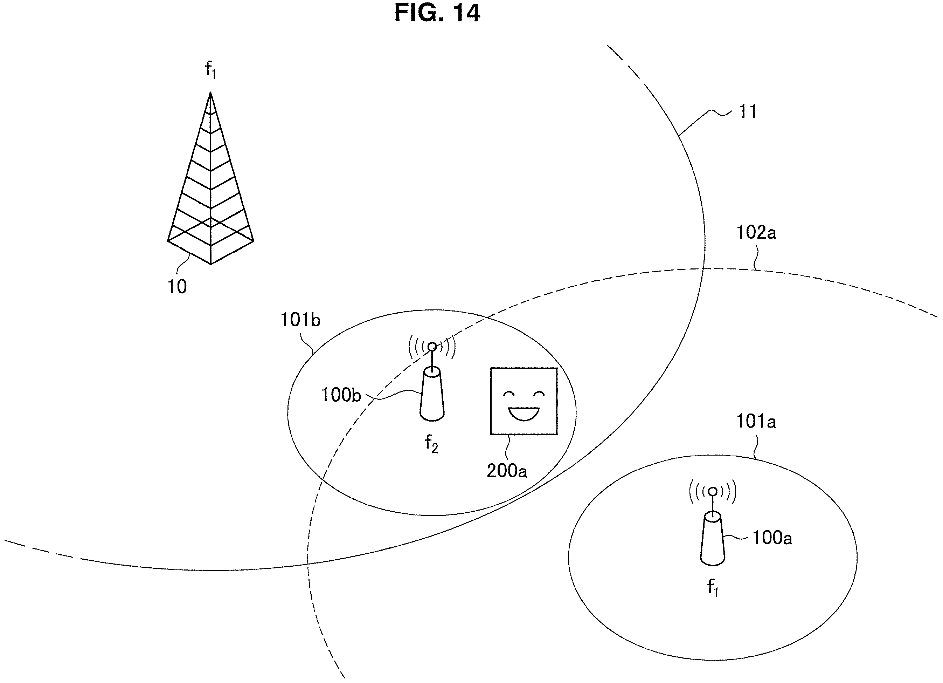

FIG. 14 is an example of the visual information generated by the management server 300, and is an example of the information that visually expresses the positions of the radio wave tower 10, the WSD 100, and the DTV receiver 200, and the interference range and communicatable area by the WSD 100. The reference sign 101a indicates a communicatable area of the WSD 100a, and the reference sign 102a indicates an area that can interfere by the wireless communication of the WSD 100a. Also, the reference sign 102a indicates the communicatable area of the WSD 100b. Further, FIG. 14 illustrates the WSD 100a that performs the wireless communication in the frequency band f₁, the WSD 100b that performs the wireless communication in the frequency band f₂, and the radio wave tower 10 that performs the DTV broadcast in the frequency band f₁. The control unit 333 generates the visual information illustrated in FIG. 14, for example. The management server 300 can present a current positional relationship or the like of each device in an easily understandable manner, to the operator of the WSD 100 and the user of the DTV receiver 200, by generating the visual information illustrated in FIG. 14.

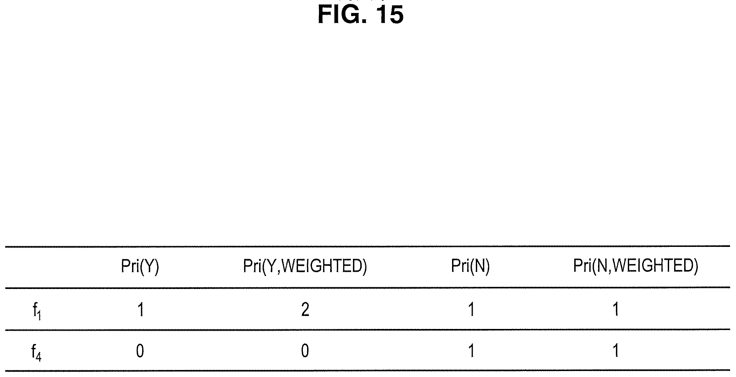

FIG. 15 is an explanatory diagram illustrating an example of the information managed by the management server 300. FIG. 15 illustrates an example of information of the DTV receiver 200 in the interference giving area of the WSD 100, which is managed by the management server 300.

FIG. 15 illustrates the number of DTV receivers 200 in the interference giving area in the frequency band f₁ being 1, and the number of DTV receivers 200 outside the interference giving area in the frequency band f₁ being 1. The weight may be set to the number of DTV receivers 200 in the interference giving area, and the value of the "Weight" column of the table illustrated in FIG. 12 can be referred to as the weight.

Similarly, FIG. 15 illustrates the number of DTV receivers 200 in the interference giving area in the frequency band f₄ being 0, and the number of DTV receivers 200 outside the interference giving area in the frequency band f₄ being 1.

The information illustrated in this FIG. 15 can be used in the determination of whether the business operator side that provides the white space service performs the white space service or performs the re-transmission of the content of the DTV broadcast, in each frequency band, for example.

The management server 300 may generate and present a user interface for causing the administrator of the DTV broadcast of the radio wave tower 10, the business operator of the white space service, or the user of the WSD 100 to register information. The control unit 333 may execute the generation of the user interface, for example.

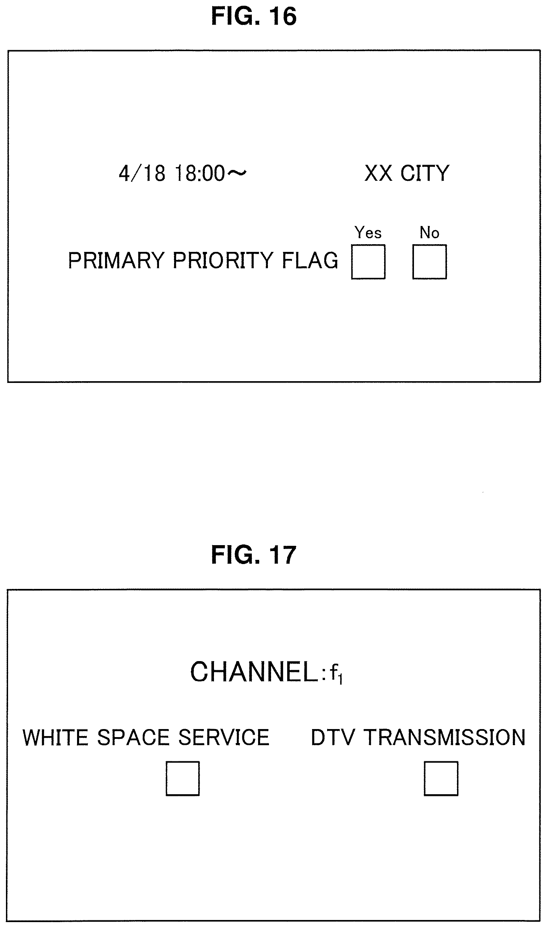

FIG. 16 is an explanatory diagram illustrating an example of the user interface generated by the management server 300, and is an explanatory diagram illustrating an example of the user interface for causing the administrator to set the reception priority of the DTV broadcast, which is generated for the administrator of the DTV broadcast of the radio wave tower 10. FIG. 16 is an example of the user interface for causing the administrator of the DTV broadcast of the radio wave tower 10 to set whether or not the content of the DTV broadcast broadcasted from a specific date and time (on April 1 at 18 o'clock, in the example of FIG. 16) is to be prioritized to be viewed in a specific area. By causing the administrator of the DTV broadcast of the radio wave tower 10 to set in the user interface illustrated in FIG. 16, the management server 300 can manage the information of whether or not the content of the DTV broadcast broadcasted from the date and time is prioritized to be viewed in the specific area.

FIG. 17 is an explanatory diagram illustrating an example of the user interface generated by the management server 300, and is an explanatory diagram illustrating an example of the user interface that the management server 300 generates for the business operator of the white space service. FIG. 17 illustrates an example of a user interface for causing the business operator of the white space service to set whether a certain frequency band (the frequency band f₁, in the example illustrated in FIG. 17) is to be used in the white space service or to be used in the re-transmission of the content of the DTV broadcast. The business operator of the white space service manipulates the user interface illustrated in FIG. 17, and thereby the management server 300 can acquire the information of whether a certain frequency band is to be used in the white space service or to be used in the re-transmission of the content of the DTV broadcast.

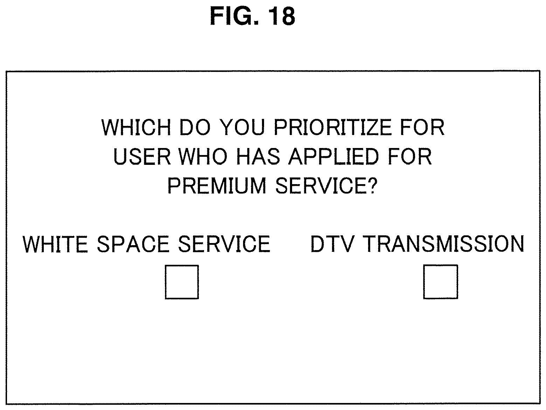

FIG. 18 is an explanatory diagram illustrating an example of the user interface generated by the management server 300, and is an explanatory diagram illustrating an example of the user interface that the management server 300 generates for the user of the WSD 100. FIG. 18 illustrates an example of the user interface for causing the user of the WSD 100 to set whether to prioritize the white space service or to prioritize the re-transmission of the content of the DTV broadcast, for the user that has applied for a premium service. The user of the WSD 100 manipulates the user interface illustrated in FIG. 18, and thereby the management server 300 can acquire the information of whether to prioritize the white space service or to prioritize the re-transmission of the content of the DTV broadcast, for the user that has applied for the premium service.

The management server 300 can manage the information illustrated in FIG. 11, by generating the user interfaces illustrated in FIGS. 16 to 18 and causing the administrator of the DTV broadcast of the radio wave tower 10, the business operator of the white space service, and the user of the WSD 100 to register the information.

In the above, the functional configuration examples of the respective devices that configure the communication system according to the embodiment of the present disclosure has been described. Next, an operation example of the communication system according to the embodiment of the present disclosure will be described.

### [1.3. Operation Example]

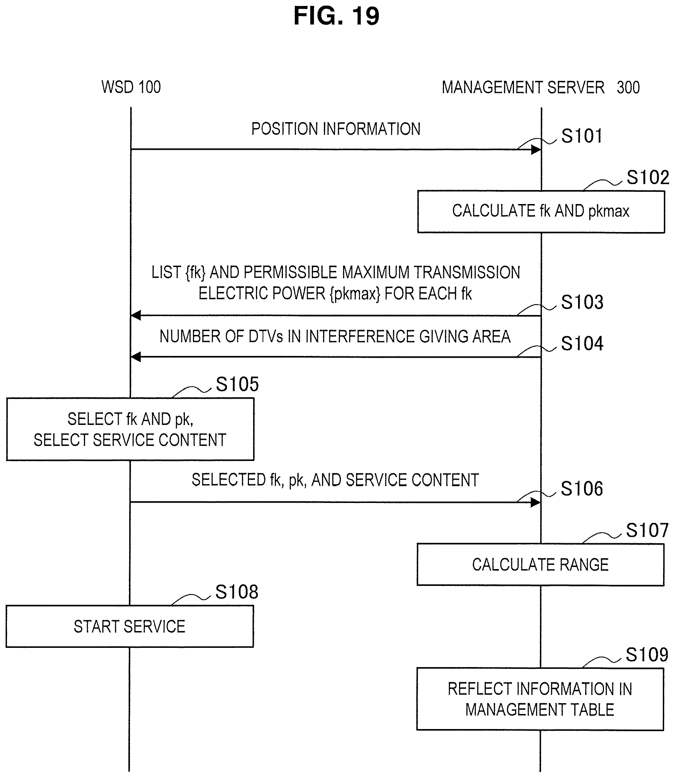

The WSD 100 and the management server 300 has the above configuration to exchange information in advance for example, and causes the operator of the WSD 100 to decide which service the WSD 100 executes in which frequency band. FIG. 19 is a flow diagram illustrating an operation example of the communication system according to the embodiment of the present disclosure. FIG. 19 illustrates an operation example in which the WSD 100 exchanges information with the management server 300, when starting the service, for the purpose of deciding which service the WSD 100 executes in which frequency band. In the following, the operation example of the communication system according to the embodiment of the present disclosure will be described by using FIG. 19.

The WSD 100 transmits current position information to the management server 300, at the start of service (step S101). The transmission of the current position information to the management server 300 is performed by the control unit 153 via the network communication unit 130, for example. The current position information may be detailed information of latitude and longitude acquired by the sensor that acquires a current position, such as a GPS sensor for example, and may be an address input by the operator of the WSD 100.

Upon acquiring the information of the current position of the WSD 100, the management server 300 calculates the frequency band fₖ that the WSD 100 can use at the present moment, and the permissible maximum transmission electric power pₖₘₐₓ in the frequency band (step S102). The control unit 333 executes the calculation process of step S102, for example. The management server 300 calculates the frequency band fₖ that the WSD 100 can use at the present moment, and the permissible maximum transmission electric power pₖₘₐₓ in the frequency band, with reference to the table illustrated in FIG. 11, for example.

Upon calculating the frequency band fₖ that the WSD 100 can use at the present moment, and the permissible maximum transmission electric power pₖₘₐₓ in the frequency band in above step S102, the management server 300 returns a list of the frequency band fₖ and a list of the permissible maximum transmission electric power pₖₘₐₓ to the WSD 100 (step S103). The control unit 333 performs the return process of step S103 via the communication unit 310, for example.

Also, the management server 300 transmits the information of the number of DTV receivers 200 in the interference giving area of the WSD 100, after the return of above step S103 (which may be before the return and at the same time as the return, as a matter of course) (step S104). The control unit 333 performs the transmission process of step S104 via the communication unit 310, for example. The management server 300 can obtain the information of the number of DTV receivers 200 in the interference giving area of the WSD 100, by referring to the information illustrated in FIG. 14, for example.

Upon receiving the information of the frequency band fₖ that can be used at the present moment and the permissible maximum transmission electric power pₖₘₐₓ in the frequency band, and the information of the number of DTV receivers 200 in the interference giving area of the WSD 100, from the management server 300, the WSD 100 selects the frequency band fₖ used in the service and the permissible maximum transmission electric power pₖₘₐₓ in the frequency band, and selects the content of the service to provide (step S105). The control unit 153 executes the selection process of step S105, for example. In the present embodiment, the service selected by the WSD 100 is either the white space service or the re-transmission of the content of the DTV broadcast.

Upon selecting the frequency band fₖ used in the service, the permissible maximum transmission electric power pₖₘₐₓ in the frequency band, and the content of the service to provide in step S105, the WSD 100 transmits, to the management server 300, the selected frequency band fₖ, the permissible maximum transmission electric power pₖₘₐₓ in the frequency band, and the content of the service to provide (step S106). The control unit 153 performs the transmission process of step S106 via the network communication unit 130, for example.

Upon receiving the frequency band fₖ selected by the WSD 100, the permissible maximum transmission electric power pₖₘₐₓ in the frequency band, and the content of the service to provide, from the WSD 100, the management server 300 calculates a range by using the received information (step S107). The control unit 333 performs the calculation process of step S107, for example.

Then, the WSD 100 starts the service selected in the selection process of above step S105 (step S108), and the management server 300 reflects the range calculated by the calculation process of above step S107, in the management table for managing the information of the WSD 100 illustrated in FIG. 13 (step S109).

The management server 300 can supply the information of the appropriate frequency band and the permissible maximum transmission electric power to the WSD 100, by executing a series of operation illustrated in FIG. 19. Also, the WSD 100 can start the service in the appropriate frequency band and the permissible maximum transmission electric power that do not have influence on another device, by executing a series of operation illustrated in FIG. 19.

### <2. Conclusion>

As described above, the embodiment of the present disclosure provides the management server 300 that acquires the information from the WSD 100 and the DTV receiver 200 and generates the statistical information of the DTV receiver 200. Also, the embodiment of the present disclosure provides the management server 300 that presents the user interface for presenting the situation of the WSD 100 and the DTV receiver 200 to the operator of the WSD 100, on the basis of the generated statistical information.

There is provided a preferable radio wave utilization environment for both of the viewer of the DTV broadcast and the white space user, by the operator of the WSD 100 selecting the content of the DTV broadcast and the frequency band for performing the wireless communication appropriately on the basis of the information supplied from the management server 300. In particular, the degree of locational freedom for transmitting the signal and the freedom degree of the frequency band width significantly improves for the WSD 100 that bundles and uses a plurality of frequency bands (channels) of the DTV broadcast.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, upon detecting the image degradation while receiving the content in the frequency band f₁, the DTV receiver 200 may transmit the information relevant to the site of the current DTV receiver 200, to the management server 300, in order to query whether or not there is a WSD 100 that transmits the same content in another frequency band in the neighborhood. The DTV receiver 200 may acquire the information of the optimal re-delivery channel from the management server 300 and switch the frequency for receiving the content. Also, upon acquiring the information that the re-transmission of the content is performed in the frequency band f₂ from the management server 300, the DTV receiver 200 may perform diversity reception by receiving the frequency bands f₁, f₂ simultaneously. As a matter of course, DTV receiver 200 may switch to and receive the optimal frequency band from among the frequency bands f₁, f₂.

Also, the DTV receiver 200 may register, in the management server 300, the reception situation of whether the DTV broadcast is received normally, for example. If it is known that any DTV receiver 200 does not view the content of the DTV broadcast transmitted in the frequency band f₁ in a certain area, as the result of the registration of the reception situation by the DTV receiver 200, it may be such that the WSD 100 does not perform the re-transmission of the content in another frequency band.

Also, even when the WSD 100 does not bundle two channels but uses only one channel as in FIG. 2, the channel can be congested if many WSDs perform the service, and consequently there is a case in which the WSD 100 performs the wireless communication in the frequency band used in the DTV broadcast. In such a case as well, there is provided a preferable radio wave utilization environment for both of the viewer of the DTV broadcast and the user of the white space service, by applying the above embodiment.

Also, the processing steps in each process in this specification are not strictly limited to execution in a time series following the sequence described in a flowchart or a sequence diagram. For example, the processing steps in each process may be executed in a sequence that differs from a sequence described herein as a flowchart or a sequence diagram, and furthermore may be executed in parallel.

Also, a computer program for functioning the processor (for example, a CPU, a DSP, etc.) included in the device (for example, the WSD, the DTV receiver, the management server, or their modules) of the present specification as the above device (in other words, a computer program for causing the above processor to execute the operation of the component of the above device) can be created. Also, a recording medium that has recorded the computer program may be provided. Also, there may be provided a device (for example, a completed product, or a module (a component, a processing circuit, a chip, etc.) for the completed product) that includes a memory for storing the above computer program and one or more processors that can execute the above computer program. Also, a method that includes the operation of one or more components (for example, the information acquisition unit and/or the control unit, etc.) of the above device is included in the technology according to the present disclosure.

### Reference Signs List

- 10: broadcast station
- 11: service area
- 100: WSD
- 200: DTV receiver
- 300: management server

## Claims

1. A server apparatus (300), comprising:
an acquisition unit (331) configured to acquire information from a receiver device (200) that is configured to receive a radio wave of a first frequency band assigned to a first communication service and from a communication device (100) that is configured to transmit and receive a radio signal for a second communication service that secondarily utilizes the first frequency band, the acquired information including the position of the receiver device (200) and the communication device (100); and
a control unit (333) configured to generate statistical information of the receiver device (200) in an interference giving region of the communication device by using the information acquired by the acquisition unit (331), the statistical information including the number of receiver devices (200) in the interference giving region of the communication device (100) in the first frequency band, to generate information of a usable output intensity and a frequency band that the communication device (100) can use and to supply the generated information of the usable output intensity and frequency band and the generated statistical information to the communication device (100),
wherein the acquisition unit (331) is further configured to acquire, from the communication device (100), information of a frequency band to be used and an output intensity of the frequency band, which have been decided by the communication device (100) on the basis of the information supplied by the server apparatus.

2. The server apparatus according to claim 1, wherein
the control unit (333) is configured to generate display information for transmitting data provided by the first communication service, from the communication device to the receiver device, in a second frequency band that differs from the first frequency band, on the basis of the statistical information.

3. The server apparatus according to claim 1, wherein
the control unit (333) is configured to display information for causing a provider of the first communication service to decide a reception priority of data in the first frequency band, on the basis of the statistical information.

4. The server apparatus according to any preceding claim, wherein
the acquisition unit (331) is configured to acquire, from a provider of the first communication service, information for causing the receiver device to be prioritized to receive data provided by the first communication service.

5. The server apparatus according to any preceding claim, wherein
the acquisition unit (331) is configured to acquire one or more of information for receiving data in the first frequency band by using the second communication service, from a user of the second communication service, and information of whether or not data provided by the first communication service is received normally, from the receiver device, and position information from the receiver device and the communication device.

6. The server apparatus according to any preceding claim, wherein
the control unit (333) is configured to generate information for displaying positions of the receiver device and the communication device, a provision area of the first communication service, and an interference giving region of the communication device.

7. A communication device (100) comprising:
a control unit (153) configured to transmit and receive a radio signal for a second communication service that secondarily utilizes a first frequency band assigned to a first communication service and to transmit information including the position of the communication device (100) to a server apparatus (300) for use by the server apparatus to generate statistical information of a receiver device (200) in an interference giving region of the communication device, the statistical information including the number of receiver devices (200) in the interference giving region of the communication device (100) in the first frequency band; and
an acquisition unit (151) configured to acquire information of a usable frequency band and output intensity that the communication device (100) can use and the statistical information from the server apparatus (300),
wherein the control unit (153) is configured to register, in the server apparatus (300), information of a frequency band to be used and an output intensity of the frequency band, which have been decided on the basis of the information acquired by the acquisition unit.

8. The communication device according to claim 7, wherein
the control unit (153) is configured to decide whether or not to transmit data provided by the first communication service in a second frequency band that differs from the first frequency band, on the basis of the information registered in the server apparatus.

9. The communication device according to claim 7 or 8, wherein
the control unit (153) is configured to cause the second communication service to output data provided by the first communication service in a format identical with a format of the first communication service, or that differs from a format of the first communication service.

10. The communication device according to claim 7, 8 or 9, wherein
the control unit (153) is configured to cause the second communication service to output data provided by the first communication service in a format identical with a format of the first communication service in a case where the first frequency band is used by the second communication service, and the control unit (153) is configured to cause the second communication service to output data provided by the first communication service in a format that differs from the format of the first communication service in a case where a frequency band that differs from the first frequency band is used by the second communication service.

11. A method of a server apparatus (300), the method comprising:
acquiring information from a receiver device (200) that is configured to receive a radio wave of a first frequency band assigned to a first communication service and from a communication device (100) that is configured to transmit and receive a radio signal for a second communication service that secondarily utilizes the first frequency band, the acquired information including the position of the receiver device (200) and the communication device (100);
generating statistical information of the receiver device (200) in an interference giving region of the communication device by using the acquired information, the statistical information including the number of receiver devices (200) in the interference giving region of the communication device (100) in the first frequency band;
generating information of a usable output intensity and a frequency band that the communication device (100) can use;
supplying the generated information of the usable output intensity and frequency band and the generated statistical information to the communication device (100); and
acquiring, from the communication device (100), information of a frequency band to be used and an output intensity of the frequency band, which have been decided by the communication device (100) on the basis of the information supplied by the server apparatus.

12. A method of a communication device (100), the method comprising:
transmitting and receiving a radio signal for a second communication service that secondarily utilizes a first frequency band assigned to a first communication service;
transmitting information including the position of the communication device (100) to a server apparatus (300) for use by the server apparatus to generate statistical information of a receiver device (200) in an interference giving region of the communication device, the statistical information including the number of receiver devices (200) in the interference giving region of the communication device (100) in the first frequency band;
acquiring information of a usable frequency band and output intensity that the communication device (100) can use and the statistical information from the server apparatus (300); and
registering, in the server apparatus (300), information of a frequency band to be used and an output intensity of the frequency band, which have been decided on the basis of the acquired information.

13. A computer program comprising code means adapted to cause a computer to execute the steps of the method of claim 11 or 12, when said computer program is carried out on a computer.

## Patentansprüche

1. Servervorrichtung (300), umfassend:
eine Erfassungseinheit (331), die ausgelegt ist zum Erfassen von Informationen von einer Empfängereinrichtung (200), die ausgelegt ist zum Empfangen einer Funkwelle eines ersten Frequenzbands, einem ersten Kommunikationsdienst zugewiesen, und von einer Kommunikationseinrichtung (100), die ausgelegt ist zum Übertragen und Empfangen eines Funksignals für einen zweiten Kommunikationsdienst, der sekundär das erste Frequenzband nutzt, wobei die erfassten Informationen die Position der Empfängereinrichtung (200) und der Kommunikationseinrichtung (100) enthalten; und
eine Steuereinheit (333), die ausgelegt ist zum Erzeugen statistischer Informationen der Empfängereinrichtung (200) in einem Interferenz gebenden Gebiet der Kommunikationseinrichtung durch Verwenden der durch die Erfassungseinheit (331) erfassten Informationen, wobei die statistischen Informationen die Anzahl von Empfängereinrichtungen (200) in dem Interferenz gebenden Gebiet der Kommunikationseinrichtung (100) in dem ersten Frequenzband enthalten, um Informationen einer nutzbaren Ausgangsintensität und eines Frequenzbands, das die Kommunikationseinrichtung (100) verwenden kann, zu erzeugen und die erzeugten Informationen der nutzbaren Ausgangsintensität und des Frequenzbands und die erzeugten statistischen Informationen an die Kommunikationseinrichtung (100) zu liefern,
wobei die Erfassungseinheit (331) weiter ausgelegt ist zum Erfassen, von der Kommunikationseinrichtung (100), von Informationen eines zu verwendenden Frequenzbands und einer Ausgangsintensität des Frequenzbands, die durch die Kommunikationseinrichtung (100) auf Basis der durch die Servervorrichtung gelieferten Informationen entschieden worden sind.

2. Servervorrichtung nach Anspruch 1, wobei
die Steuereinheit (333) ausgelegt ist zum Erzeugen von Anzeigeinformationen zum Übertragen von durch den ersten Kommunikationsdienst gelieferten Daten von der Kommunikationseinrichtung an die Empfängereinrichtung, in einem zweiten Frequenzband, das von dem ersten Frequenzband differiert, auf Basis der statistischen Informationen.

3. Servervorrichtung nach Anspruch 1, wobei
die Steuereinheit (333) ausgelegt ist zum Anzeigen von Informationen, um zu bewirken, dass ein Provider des ersten Kommunikationsdienstes eine Empfangspriorität von Daten in dem ersten Frequenzband entscheidet, auf Basis der statistischen Informationen.

4. Servervorrichtung nach einem vorhergehenden Anspruch, wobei
die Erfassungseinheit (331) ausgelegt ist zum Erfassen, von einem Provider des ersten Kommunikationsdienstes, von Informationen, um zu bewirken, dass die Empfängereinrichtung priorisiert wird, um durch den ersten Kommunikationsdienst gelieferte Daten zu empfangen.

5. Servervorrichtung nach einem vorhergehenden Anspruch, wobei
die Erfassungseinheit (331) ausgelegt ist zum Erfassen von einer oder mehreren von Informationen zum Empfangen von Daten in dem ersten Frequenzband durch Verwenden des zweiten Kommunikationsdienstes, von einem Benutzer des zweiten Kommunikationsdienstes, und von Informationen darüber, ob durch den ersten Kommunikationsdienst gelieferte Daten normal oder nicht normal empfangen werden, von der Empfängereinrichtung, und Positionsinformationen von der Empfängereinrichtung und der Kommunikationseinrichtung.

6. Servervorrichtung nach einem vorhergehenden Anspruch, wobei
die Steuereinheit (333) ausgelegt ist zum Erzeugen von Informationen zum Anzeigen von Positionen der Empfängereinrichtung und der Kommunikationseinrichtung, eines Bereitstellungsbereichs des ersten Kommunikationsdienstes und eines Interferenz gebenden Gebiets der Kommunikationseinrichtung.

7. Kommunikationseinrichtung (100), umfassend:
eine Steuereinheit (153), die ausgelegt ist zum Übertragen und Empfangen eines Funksignals für einen zweiten Kommunikationsdienst, der ein einem ersten Kommunikationsdienst zugewiesenes erstes Frequenzband sekundär nutzt, und Übertragen von Informationen, die die Position der Kommunikationseinrichtung (100) enthalten, an eine Servervorrichtung (300) zur Verwendung durch die Servervorrichtung, um statistische Informationen einer Empfängereinrichtung (200) in einem Interferenz gebenden Gebiet der Kommunikationseinrichtung zu erzeugen, wobei die statistischen Informationen die Anzahl von Empfängereinrichtungen (200) in dem Interferenz gebenden Gebiet der Kommunikationseinrichtung (100) in dem ersten Frequenzband enthalten; und
eine Erfassungseinheit (151), die ausgelegt ist zum Erfassen von Informationen eines nutzbaren Frequenzbands und einer Ausgabeintensität, die die Kommunikationseinrichtung (100) verwenden kann, und der statistischen Informationen von der Servervorrichtung (300),
wobei die Steuereinheit (153) ausgelegt ist zum Registrieren, in der Servervorrichtung (300), von Informationen eines zu verwendenden Frequenzbands und einer Ausgabeintensität des Frequenzbands, die auf Basis der durch die Erfassungseinheit erfassten Informationen entschieden worden sind.

8. Kommunikationseinrichtung nach Anspruch 7, wobei
die Steuereinheit (153) ausgelegt ist zu entscheiden, ob durch den ersten Kommunikationsdienst bereitgestellte Daten in einem zweiten Frequenzband übertragen oder nicht übertragen werden sollen, das von dem ersten Frequenzband differiert, auf Basis der in der Servervorrichtung registrierten Informationen.

9. Kommunikationseinrichtung nach Anspruch 7 oder 8, wobei
die Steuereinheit (153) ausgelegt ist zu bewirken, dass der zweite Kommunikationsdienst durch den ersten Kommunikationsdienst gelieferte Daten in einem Format ausgibt, das mit einem Format des ersten Kommunikationsdienstes identisch ist, oder das von einem Format des ersten Kommunikationsdienstes differiert.

10. Kommunikationseinrichtung nach Anspruch 7, 8 oder 9, wobei
die Steuereinheit (153) ausgelegt ist zu bewirken, dass der zweite Kommunikationsdienst durch den ersten Kommunikationsdienst gelieferte Daten in einem Format ausgibt, das mit einem Format des ersten Kommunikationsdienstes identisch ist, in einem Fall, wo das erste Frequenzband durch den zweiten Kommunikationsdienst verwendet wird, und die Steuereinheit (153) ausgelegt ist zu bewirken, dass der zweite Kommunikationsdienst durch den ersten Kommunikationsdienst gelieferte Daten in einem Format ausgibt, das von dem Format des ersten Kommunikationsdienstes differiert, in einem Fall, wo ein Frequenzband, das von dem ersten Frequenzband differiert, durch den zweiten Kommunikationsdienst verwendet wird.

11. Verfahren einer Servervorrichtung (300), wobei das Verfahren umfasst:
Erfassen von Informationen von einer Empfängereinrichtung (200), die ausgelegt ist zum Empfangen einer Funkwelle eines ersten Frequenzbands, einem ersten Kommunikationsdienst zugewiesen, und von einer Kommunikationseinrichtung (100), die ausgelegt ist zum Übertragen und Empfangen eines Funksignals für einen zweiten Kommunikationsdienst, der sekundär das erste Frequenzband nutzt, wobei die erfassten Informationen die Position der Empfängereinrichtung (200) und der Kommunikationseinrichtung (100) enthalten;
Erzeugen statistischer Informationen der Empfängereinrichtung (200) in einem Interferenz gebenden Gebiet der Kommunikationseinrichtung durch Verwenden der erfassten Informationen, wobei die statistischen Informationen die Anzahl von Empfängereinrichtungen (200) in dem Interferenz gebenden Gebiet der Kommunikationseinrichtung (100) in dem ersten Frequenzband enthalten;
Erzeugen von Informationen einer nutzbaren Ausgabeintensität und eines Frequenzbands, die die Kommunikationseinrichtung (100) verwenden kann;
Liefern der erzeugten Informationen der nutzbaren Ausgabeintensität und des Frequenzbands und der erzeugten statistischen Informationen an die Kommunikationseinrichtung (100); und
Erfassen, von der Kommunikationseinrichtung (100), von Informationen eines zu verwendenden Frequenzbands und einer Ausgangsintensität des Frequenzbands, die durch die Kommunikationseinrichtung (100) auf Basis der durch die Servervorrichtung gelieferten Informationen entschieden worden sind.

12. Verfahren einer Kommunikationseinrichtung (100), wobei das Verfahren umfasst:
Übertragen und Empfangen eines Funksignals für einen zweiten Kommunikationsdienst, der ein einem ersten Kommunikationsdienst zugewiesenes erstes Frequenzband sekundär nutzt;
Übertragen von Informationen einschließlich der Position der Kommunikationseinrichtung (100) an eine Servervorrichtung (300) zur Verwendung durch die Servervorrichtung zum Erzeugen statistischer Informationen einer Empfängereinrichtung (200) in einem Interferenz gebenden Gebiet der Kommunikationseinrichtung, wobei die statistischen Informationen die Anzahl von Empfängereinrichtungen (200) in dem Interferenz gebenden Gebiet der Kommunikationseinrichtung (100) in dem ersten Frequenzband enthalten;
Erfassen von Informationen eines nutzbaren Frequenzbands und einer Ausgabeintensität, die die Kommunikationseinrichtung (100) verwenden kann, und der statistischen Informationen von der Servervorrichtung (300); und
Registrieren, in der Servervorrichtung (300), von Informationen eines zu verwendenden Frequenzbands und einer Ausgabeintensität des Frequenzbands, die auf Basis der erfassten Informationen entschieden worden sind.

13. Computerprogramm umfassend Codemittel ausgelegt, um zu bewirken, dass ein Computer die Schritte des Verfahrens von Anspruch 11 oder 12 ausführt, wenn das Computerprogramm auf einem Computer ausgeführt wird.

## Revendications

1. Appareil serveur (300), comprenant :
une unité d'acquisition (331) configurée pour acquérir des informations à partir d'un dispositif récepteur (200) configuré pour recevoir une onde radio d'une première bande de fréquences attribuée à un premier service de communication et à partir d'un dispositif de communication (100) configuré pour émettre et recevoir un signal radio pour un second service de communication qui utilise secondairement la première bande de fréquences, les informations acquises comportant la position du dispositif récepteur (200) et du dispositif de communication (100) ; et
une unité de commande (333) configurée pour générer des informations statistiques du dispositif récepteur (200) dans une région productrice d'interférences du dispositif de communication en utilisant les informations acquises par l'unité d'acquisition (331), les informations statistiques comportant le nombre de dispositifs récepteurs (200) dans la région productrice d'interférences du dispositif de communication (100) dans la première bande de fréquences, générer des informations d'une intensité de sortie et d'une bande de fréquences utilisables que le dispositif de communication (100) peut utiliser et fournir les informations générées de l'intensité de sortie et de la bande de fréquences utilisables ainsi que les informations statistiques générées au dispositif de communication (100),
dans lequel l'unité d'acquisition (331) est en outre configurée pour acquérir, à partir du dispositif de communication (100), des informations d'une bande de fréquences à utiliser et d'une intensité de sortie de la bande de fréquences, qui ont été décidées par le dispositif de communication (100) sur la base des informations fournies par l'appareil serveur.

2. Appareil serveur selon la revendication 1, dans lequel
l'unité de commande (333) est configurée pour générer des informations d'affichage pour la transmission de données fournies par le premier service de communication, du dispositif de communication au dispositif récepteur, dans une deuxième bande de fréquences qui diffère de la première bande de fréquences, sur la base des informations statistiques.

3. Appareil serveur selon la revendication 1, dans lequel
l'unité de commande (333) est configurée pour afficher des informations permettant à un fournisseur du premier service de communication de décider d'une priorité de réception des données dans la première bande de fréquences, sur la base des informations statistiques.

4. Appareil serveur selon l'une quelconque des revendications précédentes, dans lequel
l'unité d'acquisition (331) est configurée pour acquérir, auprès d'un fournisseur du premier service de communication, des informations permettant de prioriser le dispositif récepteur pour recevoir les données fournies par le premier service de communication.

5. Appareil serveur selon l'une quelconque des revendications précédentes, dans lequel
l'unité d'acquisition (331) est configurée pour acquérir une ou plusieurs d'informations permettant de recevoir des données dans la première bande de fréquences en utilisant le deuxième service de communication, auprès d'un utilisateur du deuxième service de communication, et d'informations indiquant que les données fournies par le premier service de communication sont reçues normalement ou non, à partir du dispositif récepteur, ainsi que des informations de position à partir du dispositif récepteur et du dispositif de communication.

6. Appareil serveur selon n'importe quelle revendication précédente, dans lequel
l'unité de commande (333) est configurée pour générer des informations permettant d'afficher des positions du dispositif récepteur et du dispositif de communication, une zone de fourniture du premier service de communication, et une région productrice d'interférences du dispositif de communication.

7. Dispositif de communication (100) comprenant :
une unité de commande (153) configurée pour émettre et recevoir un signal radio pour un second service de communication qui utilise secondairement une première bande de fréquences attribuée à un premier service de communication et transmettre des informations comportant la position du dispositif de communication (100) à un appareil serveur (300) en vue de leur utilisation par l'appareil serveur pour générer des informations statistiques d'un dispositif récepteur (200) dans une région productrice d'interférences du dispositif de communication, les informations statistiques comportant le nombre de dispositifs récepteurs (200) dans la région productrice d'interférences du dispositif de communication (100) dans la première bande de fréquences ; et
une unité d'acquisition (151) configurée pour acquérir des informations d'une bande de fréquences et d'une intensité de sortie utilisables que le dispositif de communication (100) peut utiliser ainsi que les informations statistiques à partir de l'appareil serveur (300),
dans laquelle l'unité de commande (153) est configurée pour enregistrer, dans l'appareil serveur (300), des informations d'une bande de fréquences à utiliser et d'une intensité de sortie de la bande de fréquences, qui ont été décidées sur la base des informations acquises par l'unité d'acquisition.

8. Dispositif de communication selon la revendication 7, dans lequel
l'unité de commande (153) est configurée pour décider de transmettre ou non les données fournies par le premier service de communication dans une deuxième bande de fréquences qui diffère de la première bande de fréquences, sur la base des informations enregistrées dans l'appareil serveur.

9. Dispositif de communication selon la revendication 7 ou 8, dans lequel
l'unité de commande (153) est configurée pour amener le deuxième service de communication à délivrer des données fournies par le premier service de communication dans un format identique à un format du premier service de communication, ou qui diffère d'un format du premier service de communication.

10. Dispositif de communication selon la revendication 7, 8 ou 9, dans lequel
l'unité de commande (153) est configurée pour amener le deuxième service de communication à délivrer des données fournies par le premier service de communication dans un format identique à un format du premier service de communication dans un cas où la première bande de fréquences est utilisée par le deuxième service de communication, et l'unité de commande (153) est configurée pour amener le second service de communication à délivrer des données fournies par le premier service de communication dans un format différent du format du premier service de communication dans un cas où une bande de fréquences différente de la première bande de fréquences est utilisée par le second service de communication.

11. Procédé d'un appareil serveur (300), le procédé comprenant :
l'acquisition d'informations à partir d'un dispositif récepteur (200) configuré pour recevoir une onde radio d'une première bande de fréquences attribuée à un premier service de communication et à partir d'un dispositif de communication (100) configuré pour émettre et recevoir un signal radio pour un second service de communication qui utilise secondairement la première bande de fréquences, les informations acquises comportant la position du dispositif récepteur (200) et du dispositif de communication (100) ;
la génération d'informations statistiques du dispositif récepteur (200) dans une région productrice d'interférences du dispositif de communication en utilisant les informations acquises, les informations statistiques comportant le nombre de dispositifs récepteurs (200) dans la région productrice d'interférences du dispositif de communication (100) dans la première bande de fréquences ;
la génération d'informations d'une intensité de sortie utilisable et d'une bande de fréquences que le dispositif de communication (100) peut utiliser ;
la fourniture des informations générées de l'intensité de sortie et de la bande de fréquences utilisables ainsi que des informations statistiques générées au dispositif de communication (100) ; et
l'acquisition, à partir du dispositif de communication (100), d'informations d'une bande de fréquences à utiliser et d'une intensité de sortie de la bande de fréquences, qui ont été décidées par le dispositif de communication (100) sur la base des informations fournies par l'appareil serveur.

12. Procédé d'un dispositif de communication (100), le procédé comprenant :
l'émission et la réception d'un signal radio pour un second service de communication qui utilise secondairement une première bande de fréquences attribuée à un premier service de communication ;
la transmission d'informations comportant la position du dispositif de communication (100) à un appareil serveur (300) en vue de leur utilisation par l'appareil serveur pour générer des informations statistiques d'un dispositif récepteur (200) dans une région productrice d'interférences du dispositif de communication, les informations statistiques comprenant le nombre de dispositifs récepteurs (200) dans la région productrice d'interférences du dispositif de communication (100) dans la première bande de fréquences ;
l'acquisition d'informations d'une bande de fréquences et d'une intensité de sortie utilisables que le dispositif de communication (100) peut utiliser ainsi que des informations statistiques à partir de l'appareil serveur (300) ; et
l'enregistrement, dans l'appareil serveur (300), d'informations d'une bande de fréquences à utiliser et d'une intensité de sortie de la bande de fréquences, qui ont été décidées sur la base des informations acquises.

13. Programme informatique comprenant un moyen de code conçu pour amener un ordinateur à exécuter les étapes du procédé selon la revendication 11 ou 12, quand ledit programme informatique est mis en œuvre sur un ordinateur.
